# EUROPÄISCHE PATENTSCHRIFT

(11) **EP 3 887 783 B1**
(45) Veröffentlichungstag und Bekanntmachung des Hinweises auf die Patenterteilung: **10.01.2024**
(21) Anmeldenummer: 19806119.4
(22) Anmeldetag: 12.11.2019
(51) Int. Cl.: G01J 3/26, G01J 3/453, G01J 3/32, G01J 3/02, G02B 5/28, G02B 26/00, G02B 26/06

(54) **INTERFEROMETEREINRICHTUNG UND VERFAHREN ZUR HERSTELLUNG EINER INTERFEROMETEREINRICHTUNG**
INTERFEROMETER DEVICE AND METHOD FOR PRODUCING AN INTERFEROMETER DEVICE
DISPOSITIF D'INTERFÉROMÉTRIE ET PROCÉDÉ DE FABRICATION D'UN DISPOSITIF D'INTERFÉROMÉTRIE

(30) Priorität: 26.11.2018 DE 102018220272
(43) Veröffentlichungstag der Anmeldung: 06.10.2021
(73) Patentinhaber: Robert Bosch GmbH, 70442 Stuttgart (DE)
(72) Erfinder: STEIN, Benedikt, 70193 Stuttgart (DE); HUSNIK, Martin, 70176 Stuttgart (DE); SCHELLING, Christoph, 70619 Stuttgart (DE); BUCK, Thomas, 71732 Tamm (DE); KRAEMMER, Christoph Daniel, 76137 Karlsruhe (DE); ROEDEL, Reinhold, 72760 Reutlingen (DE)
(86) Internationale Anmeldenummer: PCT/EP2019/080930
(87) Internationale Veröffentlichungsnummer: WO 2020/108975

(56) Entgegenhaltungen:
- EP-A1- 2 781 946
- DE-A1-102011 086 596
- US-A1- 2005 146 241
- US-A1- 2006 017 689

## Beschreibung

Die vorliegende Erfindung betrifft eine Interferometereinrichtung und ein Verfahren zur Herstellung einer Interferometereinrichtung.

### Stand der Technik

Zur Miniaturisierung von durchstimmbaren spektralen Filter lassen sich Fabry-Pérot Interferometer (FPI) vorteilhaft in MEMS-Technologie realisieren. Dabei wird ausgenutzt, dass eine Kavität bestehend aus zwei planparallelen, hochreflektierenden Spiegeln mit einem Abstand (Kavitätslänge) im Bereich optischer Wellenlängen eine starke Transmission nur für Wellenlängen zeigt, bei denen die Kavitätslänge einem ganzzahligen Vielfachen der halben Wellenlänge entspricht. Die Kavitätslänge lässt sich beispielsweise mittels elektrostatischer oder piezoelektrischer Aktuierung verändern, wodurch ein spektral durchstimmbares Filterelement entsteht. Ein Großteil der bekannten FPIs verwendet eine elektrostatische Aktuierung der Spiegel (im Gegensatz zur oben erwähnten piezoelektrischen Aktuierung), wobei die Spiegel oft als Membranen ausgelegt sind. Dabei wird eine Spannung zwischen zwei Elektroden angelegt, die sich auf der Ebene der beiden Spiegel befinden, sodass sich aufgrund der elektrostatischen Anziehung beide Spiegel aufeinander zu bewegen. Übliche Membranspiegel umfassen zumindest ein teilweise leitfähiges Halbleitermaterial.

Da bei Membranspiegeln üblicherweise das Membranmaterial auch in großen Flächen außerhalb des Aktuationsbereiches vorhanden ist, kann dies große Parasitärkapazitäten erzeugen, welche eine Positionsdetektion erschweren können, bestenfalls nur verlangsamen und den Stromverbrauch erhöhen können. Außerdem wird so eine Aktuation im "constant charge" Modus unmöglich.

In der WO15002028 wird ein Fabry-Perot-Filter beschrieben, welches eine Elektrode auf einem der Spiegel umfasst, welche mehrere Teilelektroden umfasst, so dass auf derselben Membran etwa durch lokal unterschiedliche Dotierungen verschiedene elektrische Potentiale angelegt werden können. Dies kann jedoch Aufladungseffekte von pn-Übergängen erzeugen (spannungsabhängige Parasitärkapazitäten) und Leckströme bedingen.

Außerdem muss auch der optische Bereich zumindest schwach dotiert werden, was die optische Qualität der Schichten beeinträchtigen kann.

Weitere Interferometervorrichtungen mit lateral strukturierten unterteilten Elektroden sind aus DE102011086596, US2005/146241, EP2781946 und US2006/017689 bekannt.

### Offenbarung der Erfindung

Die vorliegende Erfindung schafft eine Interferometereinrichtung nach Anspruch 1 und ein Verfahren zur Herstellung einer Interferometereinrichtung nach Anspruch 11.

Bevorzugte Weiterbildungen sind Gegenstand der Unteransprüche.

### Vorteile der Erfindung

Die der vorliegenden Erfindung zugrunde liegenden Idee besteht darin, eine Interferometereinrichtung sowie ein Verfahren zur Herstellung einer Interferometereinrichtung anzugeben, welche sich durch eine Aktuationselektrode auszeichnen, die von den Spiegeln beabstandet ist und von diesen elektrisch isoliert ist. An die Elektrode können an mehreren Teilbereichen unterschiedliche elektrische Potentiale angelegt werden und vorteilhaft Parasitärkapazitäten in der Interferometereinrichtung reduziert werden.

Erfindungsgemäß umfasst die Interferometereinrichtung ein Substrat; einen Zwischenschichtbereich, welcher auf dem Substrat aufgebracht ist; eine erste Spiegeleinrichtung und eine zweite Spiegeleinrichtung, welche zueinander planparallel ausgerichtet sind und um einen ersten Abstand voneinander beabstandet sind und in dem Zwischenschichtbereich eingefasst oder darauf angeordnet sind, wobei der Zwischenschichtbereich in einem Innenbereich unterhalb der ersten Spiegeleinrichtung und/oder unterhalb der zweiten Spiegeleinrichtung entfernt ist; und eine lateral strukturierte Elektrode, welche einen ersten Teilbereich und zumindest einen lateral davon getrennten und elektrisch isolierten zweiten Teilbereich umfasst, welche an unterschiedliche elektrische Potentiale anschließbar sind, wobei die Elektrode von der ersten oder der zweiten Spiegeleinrichtung um einen zweiten Abstand entfernt angeordnet ist, wobei sich der erste Teilbereich im Innenbereich erstreckt und auf dem Zwischenschichtbereich angeordnet ist und sich der zweite Teilbereich in einem Außenbereich des Zwischenschichtbereichs erstreckt, so dass die erste Spiegeleinrichtung und/oder die zweite Spiegeleinrichtung durch den ersten Teilbereich im Innenbereich elektrostatisch und parallel zum Substrat bewegbar ist und der erste Abstand variierbar ist.

Der Zwischenschichtbereich kann vorteilhaft jener Bereich eines Materials einer Opferschicht sein, welcher nach einem Strukturieren und teilweisem Entfernen des Materials der Opferschicht in einem strukturierten Bereich erhalten bleibt. Das Material des Zwischenschichtbereichs ist vorteilhaft ätzbar und elektrisch isolierend.

Durch die Beabstandung von den Spiegeleinrichtungen und vom Substrat und durch die Anordnung sowie Einbettung der Elektrode in und auf den Zwischenschichtbereich kann die Elektrode vorteilhaft elektrisch sowohl vom Substrat als auch von den Spiegeleinrichtungen isoliert sein. Durch die Beabstandung sowie die Unterteilung in zumindest zwei lateral getrennte und voneinander isolierte Teilbereiche können Parasitärkapazitäten durch die Elektrode vorteilhaft reduziert werden. Der erste Teilbereich kann als Aktuationselektrode für die erste und/oder zweite Spiegeleinrichtung wirken. Dazu kann die erste und/oder zweite Spiegeleinrichtung selbst eine Aktuationselektrode umfassen, welche auf der Spiegeleinrichtung angeordnet oder eingefasst sein kann, oder die Spiegeleinrichtung kann selbst elektrisch leitfähig sein und an ein zur Aktuation nötiges Potential angeschlossen sein. Die Elektrode kann sich über, unter oder zwischen der ersten oder zweiten Spiegeleinrichtung befinden. Erfindungsgemäß befindet sich die Elektrode zwischen oder unter den Spiegeleinrichtungen, wobei der zweite und weitere Teilbereiche im Außenbereich in den Zwischenschichtbereich eingefasst und dort verankert sind, selbst also keine Aktuation auslösen. Wenn sich die Elektrode - gemäß eines nicht unter den Schutzumfang der Ansprüche fallenden Beispiels - über den Spiegeleinrichtungen befindet, kann diese vollständig auf dem Zwischenschichtbereich angeordnet sein und von einer Oberseite auch freiliegen.

Mittels der zumindest zwei Teilbereiche der Elektrode und den unterschiedlichen Potentialen können Parasitärkapazitäten in der Interferometereinrichtung vorteilhaft verringert werden. Bei der Interferometereinrichtung kann es sich um ein Fabry-Perot-Interferometer handeln. Die Verbindung oder Einfassung der Spiegeleinrichtungen mit dem Zwischenschichtbereich dient vorteilhaft als mechanische Verankerung der Spiegel am Substrat und als elektrische Isolierung. Die im Innenbereich freigestellten Spiegeleinrichtungen wirken als Membranspiegel. Die beabstandete Elektrode erstreckt sich vorteilhaft in einer anderen Ebene als die beiden Spiegeleinrichtungen. Als Gegenelektrode zur Elektrode kann eine oder beide Spiegeleinrichtungen eine separate Elektrode umfassen, welche auf der Spiegeleinrichtung angeordnet (z.B. metallisches Material) ist oder in dieser umfasst ist, etwa durch Dotierung eines lokalen Bereichs der Spiegeleinrichtung (eines Halbleitermaterials der Spiegeleinrichtung), oder selbst elektrisch leitend sein. Ebenso kann die Elektrode selbst mit ersten und weiteren Teilbereichen als metallische Schicht oder dotiertes Halbleitermaterial, möglicherweise auch auf einer eigenen Trägerschicht, ausgeprägt sein. Die Gegenelektrode kann mit der Spiegeleinrichtung mechanisch verbunden sein und eine parallele Auslenkung der Spiegeleinrichtung bewirken, insbesondere einer Zentralregion (optischer Bereich) des Innenbereichs.

Es ist des Weiteren möglich, dass innerhalb der lateral strukturierten Elektrode eine von dieser elektrisch isolierte Fläche aus derselben Schicht heraus realisiert sein kann.

Insbesondere durch die laterale Trennung von Potentialen an den Teilbereichen der Elektrode können parasitäre Kapazitäten zwischen den Spiegeln und der Elektrode verringert werden. Durch verringerte parasitäre Kapazitäten kann eine Positionsdetektion der Spiegel und Elektrode zueinander vorteilhaft verbessert werden, eine "constant charge" Aktuation erleichtert oder erlaubt werden. Eine Positionsdetektion kann beispielsweise mittels kapazitiver oder piezoresistiver Detektion durchführbar sein. Bei der "constant charge" Aktuation kann es sich um ein Aktuationsschema handeln, bei dem nicht die Spannung am Aktuator gesteuert wird, sondern die Ladung auf der Aktuatorkapazität.

Des Weiteren können Verluste aus einem Umladen von verringerten Parasitärkapazitäten reduziert werden und ein Stromverbrauch verringert werden. Unter Umladen kann hierbei verstanden werden, dass im Falle einer kapazitiven Detektion oder Aktuation mittels einer AC Spannung immer wieder Lade- und Entladevorgänge der Aktuatorkapazität stattfinden können.

Mittels der lateral getrennten Potentiale an der Elektrode können Leckströme vorteilhaft reduziert werden.

Es ist des Weiteren keine laterale Variation einer Dotierung einer oder mehrerer Elektrodenschichten(bereiche) notwendig und somit keine Ausbildung von pn-Übergängen, woraus vorteilhaft geringere spannungsabhängige Effekte resultieren können.

Die Spiegeleinrichtungen können verschieden oder gleich aufgebaut sein und können eine einzelne oder mehrere Schichten und/oder eine mechanische Trägerschicht mit darauf angeordneten Spiegelschicht(en) umfassen. Die Spiegeleinrichtung(en) kann/können des Weiteren auch eine tensile Vorspannung aufweisen, wodurch die Planarität der Spiegel verbessert werden kann.

Das Substrat kann beispielsweise als Wafer, insbesondere als MEMS-Wafer und die Interferometereinrichtung als MEMS-Bauteil ausgeformt sein. Der MEMS-Wafer kann vorteilhaft einseitig oder doppelseitig verkappt sein.

Gemäß einer bevorzugten Ausführungsform der Interferometereinrichtung umfasst die Elektrode im Innenbereich eine Ausnehmung in einem optischen Bereich der Interferometereinrichtung und der erste Teilbereich und der zweite Teilbereich umlaufen die Ausnehmung zumindest teilweise lateral.

Bei dem optischen Bereich handelt es sich vorteilhaft um jenen zentralen Bereich des Innenbereichs, in welchem eine elektromagnetische Strahlung durch die Spiegeleinrichtungen reflektiert oder transmittiert werden kann.

Gemäß einer bevorzugten Ausführungsform der Interferometereinrichtung umfasst die Elektrode eine Ringelektrode.

Gemäß einer bevorzugten Ausführungsform der Interferometereinrichtung sind die Teilbereiche der Elektrode durch Trenngräben vollständig lateral voneinander getrennt und voneinander elektrisch isoliert.

Die Trenngräben können das Material der Elektrode vorteilhaft in vertikaler Richtung vollständig durchtrennen.

Gemäß einer bevorzugten Ausführungsform der Interferometereinrichtung umfassen die erste und/oder die zweite Spiegeleinrichtung einen Bragg-Spiegel oder einen Metallspiegel.

Gemäß einer bevorzugten Ausführungsform der Interferometereinrichtung ist der erste Abstand kleiner ist als der zweite Abstand.

Als Bragg-Spiegel kann die Spiegeleinrichtung beispielsweise eine Materialkombination (mehrere Schichten, vorteilhaft abwechselnd) wie Silizium-Luft, Si-SiN (Silizium und Siliziumnitrid), Si-SiO₂ (Silizium-Siliziumoxid), Si-SiCN (Silizium-Siliziumkarbonnitrid), Si-SiC (Silizium-Siliziumkarbid), TiO₂- SiO₂ (Titanoxid-Siliziumoxid) oder weitere umfassen. Als Metallspiegel kann dieser eine oder mehrere Schichten mit Ag (Silber), Cu (Kupfer), Au (Gold) oder weitere umfassen.

Gemäß einer bevorzugten Ausführungsform der Interferometereinrichtung umfasst der erste Teilbereich einen Aufsetzbereich, welcher lateral elektrisch isoliert ist und wobei die erste oder die zweite Spiegeleinrichtung der Elektrode direkt zugewandt ist und Anschlagsnoppen im Innenbereich umfasst, welche sich von einer Spiegeloberfläche zur Elektrode wegerstrecken und bei einer Aktuierung auf den Aufsetzbereich aufsetzbar sind.

Gemäß einer bevorzugten Ausführungsform der Interferometereinrichtung umfassen die erste und/oder die zweite Spiegeleinrichtung im Innenbereich ein undotiertes Material.

Wenn das Material der Spiegeleinrichtungen insbesondere im Innenbereich und im optischen Bereich, welcher zur Resonatorwirkung des Fabry-Perot-Interferometers eingerichtet sein kann, keine oder lediglich eine geringe Dotierung aufweist, kann eine parasitäre optische Absorption in diesem Bereich vorteilhaft verringert sein und generell die optischen Eigenschaften des Innenbereichs verbessert sein.

Gemäß einer bevorzugten Ausführungsform der Interferometereinrichtung umfasst diese einen Ätzstopp, welcher eine Seitenwand an den Zwischenschichtbereich lateral zwischen Innenbereich und Außenbereich ausformt.

Gemäß einer bevorzugten Ausführungsform der Interferometereinrichtung sind die erste und/oder die zweite Spiegeleinrichtung an ein elektrisches Potential angeschlossen.

Erfindungsgemäß erfolgt bei dem Verfahren zur Herstellung einer Interferometereinrichtung ein Bereitstellen eines Substrats und einer ersten Opferschicht auf dem Substrat; ein Aufbringen einer Elektrode auf die erste Opferschicht und ein Strukturieren der Elektrode in einen ersten Teilbereich und zumindest einen dazu lateral und elektrisch getrennten zweiten Teilbereich,; ein Aufbringen einer zweiten Opferschicht auf die Elektrode und auf die erste Opferschicht; ein Anordnen einer ersten Spiegeleinrichtung auf der zweiten Opferschicht; ein Aufbringen einer dritten Opferschicht auf der ersten Spiegeleinrichtung; ein Anordnen einer zweiten Spiegeleinrichtung auf der dritten Opferschicht planparallel über der ersten Spiegeleinrichtung in einem ersten Abstand; und ein Entfernen der zweiten Opferschicht und der dritten Opferschicht in einem Innenbereich unterhalb der ersten und der zweiten Spiegeleinrichtung mittels eines Ätzverfahrens, wobei sich der Innenbereich zumindest über einem Teil des ersten Teilbereichs erstreckt und wobei ein in der Interferometereinrichtung verbleibender Bereich der ersten Opferschicht, der zweiten Opferschicht und der dritten Opferschicht einen Zwischenschichtbereich bilden, so dass die erste Spiegeleinrichtung und die zweite Spiegeleinrichtung in einem Außenbereich des Zwischenschichtbereichs eingefasst oder darauf angeordnet sind, und sich der erste Teilbereich ganz oder zum Teil im Innenbereich erstreckt und auf dem Zwischenschichtbereich angeordnet ist und sich der zweite Teilbereich im Außenbereich des Zwischenschichtbereichs erstreckt.

Der zweite Teilbereich kann den ersten Teilbereich lateral umlaufen.

Der Innenbereich kann sich zumindest über einem Teil des ersten Teilbereichs erstrecken.

Weiterhin kann auch die erste Opferschicht, zumindest bereichsweise im Bereich des optischen Bereichs entfernt werden.

Das Verfahren kann sich des Weiteren durch die bereits in Verbindung mit der Interferometereinrichtung genannten Merkmale und deren Vorteile auszeichnen und umgekehrt.

Das Strukturieren kann beispielsweise durch ein Belichtungs- und Ätzverfahren erfolgen.

Gemäß einer bevorzugten Ausführung des Verfahrens wird eine Ausnehmung im ersten Teilbereich und in einem optischen Bereich der Interferometereinrichtung ausgeformt und die erste Opferschicht wird in dieser Ausnehmung entfernt.

Die erste Opferschicht unterhalb der Elektrode kann eine geringere Ätzrate für das Opferschichtätzen aufweisen als die zweite und dritte Opferschicht. Auf diese Weise kann eine Unterätzung der Elektrode verringert oder vermieden werden. Dazu kann eine entsprechende Wahl des Materials der ersten Opferschicht erfolgen.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Die vorliegende Erfindung wird nachfolgend anhand des in den schematischen Figuren der Zeichnung angegebenen Ausführungsbeispiels näher erläutert.

Es zeigen:
Fig. 1 einen schematischen seitlichen Querschnitt einer Interferometereinrichtung gemäß eines Ausführungsbeispiels der vorliegenden Erfindung;
Fig. 2a einen schematischen seitlichen Querschnitt einer Interferometereinrichtung gemäß eines weiteren Ausführungsbeispiels der vorliegenden Erfindung;
Fig. 2b einen schematischen seitlichen Querschnitt einer Interferometereinrichtung gemäß eines weiteren Ausführungsbeispiels der vorliegenden Erfindung;
Fig. 3 eine Draufsicht auf eine Elektrode gemäß eines Ausführungsbeispiels der vorliegenden Erfindung; und
Fig. 4 eine Blockdarstellung der Verfahrensschritte gemäß der vorliegenden Erfindung.

In den Figuren bezeichnen gleiche Bezugszeichen gleiche bzw. funktionsgleiche Elemente.

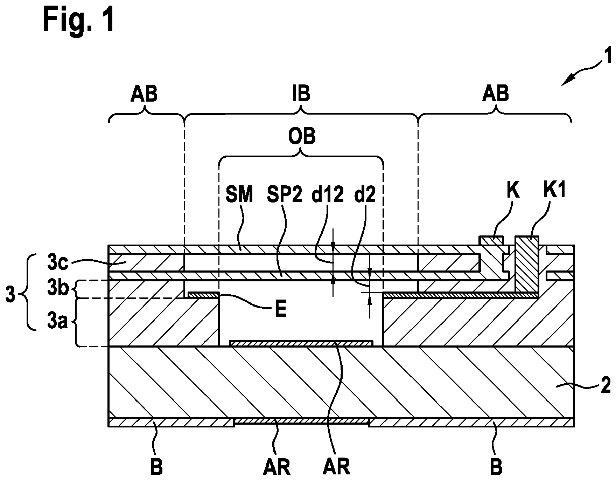

Fig. 1 zeigt einen schematischen seitlichen Querschnitt einer Interferometereinrichtung gemäß eines Ausführungsbeispiels der vorliegenden Erfindung.

Die Interferometereinrichtung 1 umfasst, ein Substrat 2; einen Zwischenschichtbereich 3, welcher auf dem Substrat 2 aufgebracht ist; eine erste Spiegeleinrichtung SP1 und eine zweite Spiegeleinrichtung SP2, welche zueinander planparallel ausgerichtet sind und um einen ersten Abstand d12 voneinander beabstandet sind und in dem Zwischenschichtbereich 3 eingefasst oder darauf angeordnet sind, wobei der Zwischenschichtbereich 3 in einem Innenbereich IB unterhalb der ersten Spiegeleinrichtung SP1 und unterhalb der zweiten Spiegeleinrichtung SP2 entfernt ist; und eine lateral strukturierte Elektrode E, welche einen ersten Teilbereich E1 und zumindest einen lateral davon getrennten und elektrisch isolierten zweiten Teilbereich (nicht gezeigt) umfasst, welche an unterschiedliche elektrische Potentiale anschließbar sind, wobei die Elektrode E von der ersten oder der zweiten Spiegeleinrichtung SP1; SP2 um einen zweiten Abstand d2 entfernt angeordnet ist, wobei sich der erste Teilbereich E1 im Innenbereich IB erstreckt und auf dem Zwischenschichtbereich 3 angeordnet ist und sich der zweite Teilbereich E2 in einem Außenbereich AB des Zwischenschichtbereichs 3 erstreckt, so dass die erste Spiegeleinrichtung SP1 und/oder die zweite Spiegeleinrichtung SP2 durch den ersten Teilbereich E1 im Innenbereich IB elektrostatisch und parallel zum Substrat 2 bewegbar ist und der erste Abstand d12 variierbar ist. In der Fig. 1 ist in einem Querschnitt eine Kontaktführung vom ersten Teilbereich E1 durch den Zwischenbereich 3, und beispielsweise auf dem Zwischenbereich 3a, und zu dessen Durchkontakt K1 gezeigt, welcher den Zwischenbereich 3b und 3c durchläuft. Durch die Aktuierung kann vorteilhaft eine im Wesentlichen parallele Auslenkung einer der Spiegeleinrichtungen SP1, SP2 relativ zur anderen Spiegeleinrichtung im Innenbereich und insbesondere im optischen Bereich OB erfolgen.

Durch eine Veränderung des Abstands der Spiegeleinrichtungen zueinander kann eine Durchlasswellenlänge der Interferometereinrichtung (Fabry-Pérot Interferometer) verändert werden.

Der Innenbereich IB kann vorteilhaft jenem Bereich entsprechen, in welchem die zweite und dritte Opferschicht 3b und 3c entfernt wurden, also die Spiegeleinrichtungen SP1 und SP2 freigestellt sind. Der Zwischenschichtbereich 3 kann somit eine Verankerung der Spiegeleinrichtungen und der Elektrode im Außenbereich AB darstellen und diese mechanisch und elektrisch isoliert am Substrat 2 befestigen. Der erste Teilbereich E1 kann auf einem Restbereich der ersten Opferschicht 3a, also auf einem Reststück des Zwischenschichtbereichs 3 angeordnet sein, welcher sich unter dem ersten Teilbereich E1 in den Innenbereich IB hinein erstrecken kann. In der Fig. 1 ist eine Ausnehmung im optischen Bereich OB gezeigt, welche sich von den Spiegeleinrichtungen bis zum Substrat 2 erstrecken kann, und in welcher auch die Elektrode entfernt ist oder schon von Beginn an dort nicht ausgebildet war. Im optischen Bereich OB kann auf dem Substrat 2, beispielsweise beidseitig, eine antireflektive Schicht AR angeordnet sein. Auf einer Unterseite des Substrats 2 kann außerhalb des optischen Bereichs eine Blende B angeordnet sein, durch welche ein Lichteinfall oder -austritt und etwa dessen Winkel beeinflusst bzw. gefiltert werden kann. Der zweite Teilbereich der Elektrode kann vorteilhaft in den Zwischenschichtbereich eingebettet sein und von diesem beidseitig umgeben sein. Eine Kontaktierung K der Spiegeleinrichtung, vorteilhaft auch jener im Zwischenschichtbereich eingebetteten, kann von der Oberseite mittels eines Kontakts K durch den Zwischenschichtbereich hindurch erfolgen. Auch die Kontaktierung des Teilbereiches E1 kann mittels Durchkontakt etwa von einer Oberseite des Zwischenschichtbereichs durch diesen hindurchgeführt werden. Die Anordnung der Kontakte ist lediglich beispielhaft dargestellt und kann hinsichtlich der konkreten Elektrodenanordnung angepasst sein. Über dem ersten Teilbereich E1 kann somit die nächstgelegene Spiegeleinrichtung durch das an dem ersten Teilbereich E1 angelegte Potential und über eine Gegenelektrode der Spiegeleinrichtung aktuiert werden, so dass der zentrale Bereich der Spiegeleinrichtung im Bereich des optischen Bereichs parallel zur anderen Spiegeleinrichtung auslenkbar ist. Eine Verformung der Spiegeleinrichtung bei Aktuation findet vorteilhaft hauptsächlich im Innenbereich IB aber außerhalb des optischen Bereichs statt, wodurch eine Spiegelplanarität und -parallelität im optischen Bereich begünstigt sein kann. Für diesen Effekt ist bei diesem Aufbau vorteilhaft kein laterales Vorhandensein verschiedener Potentiale auf der Spiegeleinrichtung notwendig, was eine erhebliche Vereinfachung der Herstellung darstellen kann. Über dem ersten Teilbereich E1 kann die Spiegeleinrichtung eine eigene Elektrode, als separate Aktuationselektrode umfassen, welche jedoch auch in die Spiegeleinrichtung eingefasst oder dort ausgeprägt sein kann.

Eine separate Elektrode kann beispielsweise auf der Spiegeleinrichtung durch Abscheidung eines Elektrodenmaterials oder Strukturierung einer leitfähigen Schicht auf der Spiegeleinrichtung oder gezielter Dotierung eines Halbleitermaterials (etwa Silizium) erfolgen. Es kann eine signifikante Reduzierung der Parasitärkapazitäten durch eine Reduzierung der zur Kapazität beitragenden Flächen (nur notwendige Bereiche als Elektroden ausgeformt) erzielt werden.. Die separate Elektrode kann beispielsweise als Ring ausgeformt sein. Im Falle einer Ausprägung eines Elektrodenbereichs in der Spiegeleinrichtung (etwa bei Dotierung) könnte die Parasitärkapazität auf eine kleine Fläche des Kontakts und einer Zuleitung zur Gegenelektrode beschränkt sein.

Ein Verbiegen der Elektrode kann beispielsweise durch eine ausreichende Steifigkeit des Zwischenschichtbereichs 3 verhindert oder verringert werden, wobei der Zwischenschichtbereich 3 dazu eine ausreichende Dicke aufweisen kann.

Der Grundabstand vor der Aktuation d12 kann für das entsprechende Interferometer bekannt sein.

Die Reflektivität der Spiegeleinrichtungen SP1 und SP2 kann beispielsweise durch
metallische Schichten auf Trägermembranen oder einen dielektrischen DBR-Membranstapel (Bragg-Spiegel) realisiert werden.

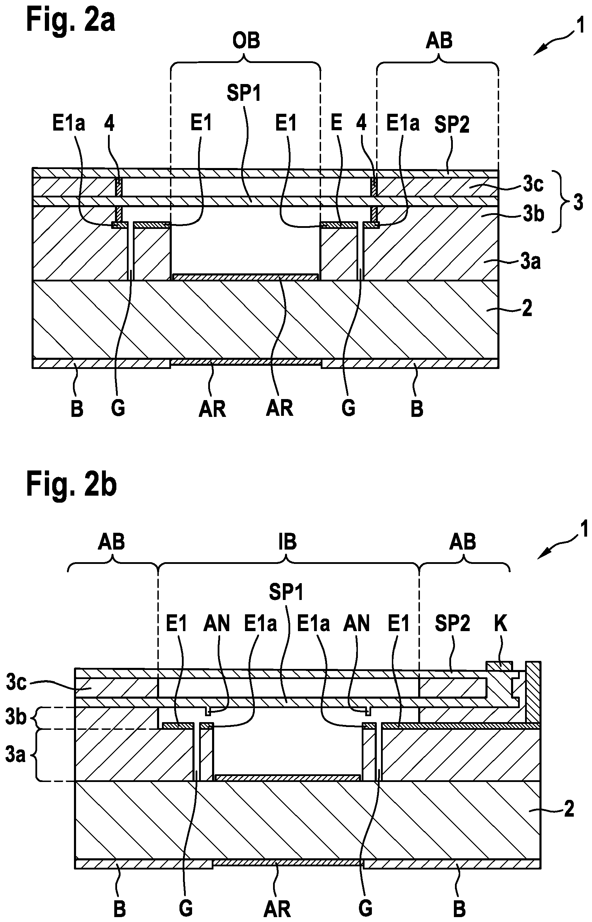

Fig. 2a zeigt einen schematischen seitlichen Querschnitt einer Interferometereinrichtung gemäß eines weiteren Ausführungsbeispiels der vorliegenden Erfindung.

Die Ausführungsform der Fig. 2a unterscheidet sich lediglich durch den Ätzstopp 4 sowie durch den Aufsetzbereich E1a von der Fig. 1. Der erste Teilbereich E1 kann einen Aufsetzbereich E1a umfassen, welcher lateral elektrisch von den anderen Teilbereichen der Elektrode E und E1 isoliert ist und wobei die erste oder die zweite Spiegeleinrichtung SP1; SP2 der Elektrode E direkt zugewandt ist

Der Aufsetzbereich E1a kann durch einen Graben G im Zwischenschichtbereich 3 von dem ersten Teilbereich E1 abgegrenzt und isoliert sein. Der Graben G kann sich durch den Zwischenschichtbereich 3 bis zum Substrat 2 erstrecken.

Antireflexionsschichten AR können auf allen Grenzflächen im optischen Pfad, die nicht Teil der Spiegeleinrichtungen sind, angeordnet werden. Durch die Blenden B kann ein optischer Bereich OB entstehen, welcher durch Reflektion und/oder Absorption den optischen Lichtpfad und den Einfallswinkel begrenzen kann.

Bei dem Zwischenschichtbereich 3 kann auf einer Seitenwand lateral zwischen Innenbereich IB und Außenbereich AB ein Ätzstopp 4 ausgebildet sein, welcher beispielsweise das Material einer der Spiegeleinrichtungen SP1, SP2 umfassen kann. Der Ätzstopp kann somit schon zum Außenbereich AB gehören. Des Weiteren kann sich eine Möglichkeit zum Schutz vor undefinierter Unterätzung bei Opferschichtprozessen ergeben. Dieser Ätzstopp 4 kann bei der Herstellung als Graben in der zweiten und dritten Opferschicht 3b und 3c ausgeprägt werden und mit dem Spiegelmaterial aufgefüllt werden und eine geringere Ätzrate aufweisen als die Opferschichten. Eine derartige Ätzstoppschicht kann auch an einer Seitenwand des Zwischenschichtbereichs der ersten Opferschicht ausgeprägt sein, etwa zum optischen Bereich hin (nicht gezeigt). Diese kann ebenfalls durch eine Grabenbildung hergestellt werden. Etwaig erzeugte Topographien, vertikal über die Elektrode oder Spiegeleinrichtung vorstehende, könnten durch Rückdünnungsverfahren ausgeglichen werden. Durch den Ätzstopp 4 kann eine präzise Definition der Membraneinspannungen der Spiegeleinrichtungen erzielt werden, da diese üblicherweise dadurch bestimmt wird, wie weit die Membranen beim Opferschichtprozess freigestellt werden, welcher typischerweise großen Schwankungen unterliegt. Dadurch kann ebenfalls eine etwaige nicht ideale Anordnung der Ätzzugänge als auch eine schwankende Ätzrate kompensiert werden. Der Ätzstopp 4 kann bei der Herstellung derart hergestellt werden, dass dieser sich auf den Aufsetzbereich E1a herunterziehen kann. Zwischen dem ersten Teilbereich E1 und dem zweiten Teilbereich kann sich auch ein Graben in dem Zwischenschichtbereich 3 unterhalb der Elektrode E befinden (nicht gezeigt). Dies kann eine deutlich vereinfachte Prozessführung bei der Herstellung ergeben. Bei einer Spiegelmembran, die keine elektrisch isolierende und gleichzeitig gegen das Opferschichtätzen ausreichend resistente Schicht enthält (was häufig der Fall ist), müsste sonst in einem üblichen Prozessablauf zur Erreichung eines Ätzstopps mindestens eine zusätzliche Schicht abgeschieden und so strukturiert werden, dass keine störende Topographie entsteht. Derartige Ätzstopps können auch in anderen Bereichen der Interferometereinrichtung ausgeprägt sein, beispielsweise im Bereich elektrischer Kontakte und Zuführungen.

Fig. 2b zeigt einen schematischen seitlichen Querschnitt einer Interferometereinrichtung gemäß eines weiteren Ausführungsbeispiels der vorliegenden Erfindung.

Die Fig. 2b unterscheidet sich darin von der Fig. 2a, dass in der Fig. 2b kein Ätzstopp gezeigt wird und Anschlagsnoppen AN von der ersten Spiegeleinrichtung SP1 von dieser in Richtung der Elektrode E1 ragen können. Des Weiteren können weitere isolierte Bereiche E1a (Aufsetzbereiche) der Elektrode E vorhanden sein, auf welche Anschlagsnoppen aufsetzen können (beim Aktuieren), welche sich von einer Spiegeloberfläche zur Elektrode E wegerstrecken können und bei einer Aktuierung auf den isolierten Bereich aufsetzbar sind. Die Anschlagsnoppen AN können eine Berührung der Spiegeleinrichtung SP1; SP2 und der Elektrode E verhindern und die Auslenkung der Spiegeleinrichtung generell begrenzen, selbst elektrisch leitfähig sein und außerhalb des Potentials der Aktuationselektrode E1 aufsetzen. Sollte es dennoch zu einer Berührung der Anschlagsnoppen mit der Elektrode E1 im isolierten Bereich E1a kommen, so können sich diese wieder einfach lösen. Mittels der Anschlagsnoppen kann verhindert werden, dass bei einem Kontakt mit der Elektrode E im isolierten Bereich und angelegter elektrischer Spannung am ersten Teilbereich E1 ein Verschweißen an den Punkten der Anschlagsnoppen stattfindet, wobei die Anschlagsnoppen üblicherweise entweder elektrisch vom restlichen Spiegelpotential getrennt sein müssten oder aus einem Isolator bestehen müssten. Erfindungsgemäß können die Anschlagsnoppen ein leitfähiges Material oder das Material der Spiegeleinrichtung umfassen, was eine vereinfachte Prozessführung ergeben kann. Die Aufsetzbereiche E1a können lateral direkt am optischen Bereich angrenzen oder weiter außen im Innenbereich IB liegen.

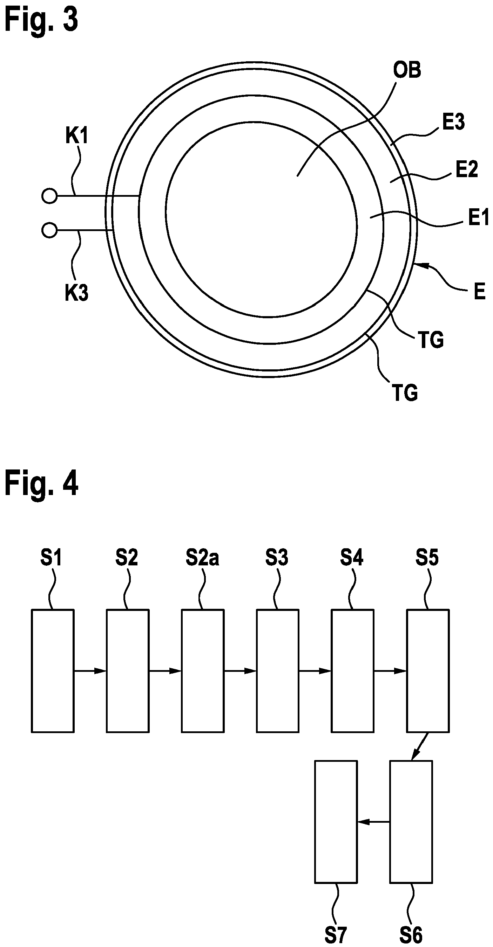

Fig. 3 zeigt eine Draufsicht auf eine Elektrode gemäß eines Ausführungsbeispiels der vorliegenden Erfindung.

Die Elektrode E kann eine Ringelektrode umfassen mit einer Ausnehmung in der Mitte, also für den optischen Bereich der Interferometereinrichtung. Durch eine geeignete Strukturierung der leitfähigen Schichten in Teilbereiche E1, E2 und weitere, können lateral voneinander getrennt verschiedene Potentiale durch die Kontakte K1, K2, beispielsweise von oben, angelegt werden. Diese Kontakte können tropfenförmig, rund, rechteckig oder in Form eines Vielecks ausgeformt sein. Eine laterale Isolation der einzelnen Teilbereiche, welche Ringe ausprägen können, kann durch Trenngräben TG erzielt werden, durch welche eine Unterbrechung der Ringstrukturen erreicht werden kann. Hierbei können dann sogenannte Durchführungen entstehen. Zusätzlich kann eine leitfähige Schicht, beispielsweise in der Elektrodenschicht E, als vergrabene Leiterbahn eines Kontakts K1, K2, K3 dienen, um Kontaktierungen unterhalb anderer leitfähiger Schichten herzustellen und diese gegebenenfalls über die vergrabene Leiterbahn zu kontaktieren. Dies kann durch ein anschließendes Abscheiden einer Isolatorschicht erreicht werden. Die elektrischen Kontakte können generell auch in anderer Weise realisiert werden.

Fig. 4 zeigt eine Blockdarstellung der Verfahrensschritte gemäß der vorliegenden Erfindung.

Bei dem Verfahren zur Herstellung einer Interferometereinrichtung erfolgt ein Bereitstellen S1 eines Substrats und einer ersten Opferschicht auf dem Substrat; ein Aufbringen S2 einer Elektrode auf die erste Opferschicht und ein Strukturieren S2a der Elektrode in einen ersten Teilbereich und zumindest einen dazu lateral und elektrisch getrennten zweiten Teilbereich, welcher den ersten Teilbereich lateral umläuft; ein Aufbringen S3 einer zweiten Opferschicht auf die Elektrode und auf die erste Opferschicht; ein Anordnen S4 einer ersten Spiegeleinrichtung auf der zweiten Opferschicht; ein Aufbringen S5 einer dritten Opferschicht auf der ersten Spiegeleinrichtung; ein Anordnen S6 einer zweiten Spiegeleinrichtung auf der dritten Opferschicht planparallel über der ersten Spiegeleinrichtung in einem ersten Abstand; und ein Entfernen S7 der zweiten Opferschicht und der dritten Opferschicht in einem Innenbereich unterhalb der ersten und der zweiten Spiegeleinrichtung mittels eines Ätzverfahrens, wobei sich der Innenbereich über dem ersten Teilbereich erstreckt und wobei ein in der Interferometereinrichtung verbleibender Bereich der ersten Opferschicht, der zweiten Opferschicht und der dritten Opferschicht einen Zwischenschichtbereich bilden, so dass die erste Spiegeleinrichtung und die zweite Spiegeleinrichtung in einem Außenbereich des Zwischenschichtbereichs eingefasst oder darauf angeordnet sind, und sich der erste Teilbereich im Innenbereich erstreckt und auf dem Zwischenschichtbereich angeordnet ist und sich der zweite Teilbereich im Außenbereich des Zwischenschichtbereichs erstreckt.

Des Weiteren kann eine Ausnehmung im ersten Teilbereich und in einem optischen Bereich der Interferometereinrichtung ausgeformt werden und die erste Opferschicht in dieser Ausnehmung entfernt werden. Das Ausformen der Ausnehmung kann bereits bei dem Anordnen oder Ausprägen der Elektrode erfolgen. Es ist ebenfalls möglich, dass die Verfahrensschritte in einer anderen als der genannten Reihenfolge erfolgen. So kann beispielsweise die Elektrode zwischen den Spiegeleinrichtungen oder über diesen als nach oben abschließendes Element angeordnet werden, also auf der dritten oder zwischen der zweiten und dritten Opferschicht.

## Patentansprüche

1. Interferometereinrichtung (1) umfassend,
- ein Substrat (2);
- einen Zwischenschichtbereich (3), welcher auf dem Substrat (2) aufgebracht ist;
- eine erste Spiegeleinrichtung (SP1) und eine zweite Spiegeleinrichtung (SP2), welche zueinander planparallel ausgerichtet sind und um einen ersten Abstand (d12) voneinander beabstandet sind und in dem Zwischenschichtbereich (3) eingefasst oder darauf angeordnet sind, wobei der Zwischenschichtbereich (3) in einem Innenbereich (IB) unterhalb der ersten Spiegeleinrichtung (SP1) und/oder unterhalb der zweiten Spiegeleinrichtung (SP2) entfernt ist; und
- eine lateral strukturierte Elektrode (E), welche einen ersten Teilbereich (E1) und zumindest einen lateral davon getrennten und elektrisch isolierten zweiten Teilbereich (E2) umfasst, welche an unterschiedliche elektrische Potentiale anschließbar sind, wobei die Elektrode (E) von der ersten oder der zweiten Spiegeleinrichtung (SP1; SP2) um einen zweiten Abstand (d2) entfernt angeordnet ist, wobei sich der erste Teilbereich (E1) im Innenbereich (IB) erstreckt und auf dem Zwischenschichtbereich (3a) angeordnet ist und sich der zweite Teilbereich (E2) in einem Außenbereich (AB) des Zwischenschichtbereichs (3) erstreckt, so dass die erste Spiegeleinrichtung (SP1) und/oder die zweite Spiegeleinrichtung (SP2) durch den ersten Teilbereich (E1) im Innenbereich (IB) elektrostatisch und parallel zum Substrat (2) bewegbar ist und der erste Abstand (d12) variierbar ist, wobei sich die Elektrode (E) zwischen oder unter den Spiegeleinrichtungen (SP1; SP2) befindet und der zweite Teilbereich (E2) im Außenbereich (AB) in den Zwischenschichtbereich (3) eingefasst und dort verankert ist.

2. Interferometereinrichtung (1) nach Anspruch 1, bei welcher die Elektrode (E) im Innenbereich (IB) eine Ausnehmung in einem optischen Bereich (OB) der Interferometereinrichtung (1) umfasst und der erste Teilbereich (E1) und der zweite Teilbereich (E2) die Ausnehmung zumindest teilweise lateral umlaufen.

3. Interferometereinrichtung (1) nach Anspruch 1 oder 2, bei welcher die Elektrode (E) eine Ringelektrode umfasst.

4. Interferometereinrichtung (1) nach einem der Ansprüche 1 bis 3, bei welcher die Teilbereiche (E1; E2; ...; En) der Elektrode durch Trenngräben (TG) vollständig lateral voneinander getrennt und voneinander elektrisch isoliert sind.

5. Interferometereinrichtung (1) nach einem der Ansprüche 1 bis 4, bei welcher die erste und/oder die zweite Spiegeleinrichtung (SP1; SP2) einen Bragg-Spiegel oder einen Metallspiegel umfasst.

6. Interferometereinrichtung (1) nach einem der Ansprüche 1 bis 5, bei welcher der erste Abstand (d12) kleiner ist als der zweite Abstand (d2).

7. Interferometereinrichtung (1) nach einem der Ansprüche 1 bis 6, bei welcher der erste Teilbereich (E1) einen Aufsetzbereich (E1a) umfasst, welcher lateral elektrisch isoliert ist und wobei die erste oder die zweite Spiegeleinrichtung (SP1; SP2) der Elektrode (E) direkt zugewandt ist und Anschlagsnoppen (AN) im Innenbereich (IB) umfasst, welche sich von einer Spiegeloberfläche zur Elektrode (E) wegerstrecken und bei einer Aktuierung auf dem Aufsetzbereich (E1a) aufsetzbar sind.

8. Interferometereinrichtung (1) nach einem der Ansprüche 1 bis 7, bei welcher die erste und/oder die zweite Spiegeleinrichtung (SP1; SP2) im Innenbereich (IB) ein undotiertes Material umfassen.

9. Interferometereinrichtung (1) nach einem der Ansprüche 1 bis 8, welche einen Ätzstopp (4) umfasst, welcher eine Seitenwand an den Zwischenschichtbereich (3) lateral zwischen Innenbereich (IB) und Außenbereich (AB) ausformt.

10. Interferometereinrichtung (1) nach einem der Ansprüche 1 bis 9, bei welcher die erste und/oder die zweite Spiegeleinrichtung (SP1; SP2) an ein elektrisches Potential angeschlossen sind.

11. Verfahren zur Herstellung einer Interferometereinrichtung (1) umfassend
- ein Bereitstellen (S1) eines Substrats (2) und einer ersten Opferschicht (3a) auf dem Substrat (2);
- Aufbringen (S2) einer Elektrode (E) auf die erste Opferschicht (3a) und Strukturieren (S2a) der Elektrode in einen ersten Teilbereich (E1) und zumindest einen dazu lateral und elektrisch getrennten zweiten Teilbereich (E2),
- Aufbringen (S3) einer zweiten Opferschicht (3b) auf die Elektrode (E) und die erste Opferschicht (3a);
- Anordnen (S4) einer ersten Spiegeleinrichtung (SP1) auf der zweiten Opferschicht (3b);
- Aufbringen (S5) einer dritten Opferschicht (3c) auf der ersten Spiegeleinrichtung (SP1);
- Anordnen (S6) einer zweiten Spiegeleinrichtung (SP2) auf der dritten Opferschicht (3c) planparallel über der ersten Spiegeleinrichtung (SP1) in einem ersten Abstand (d12); und
- Entfernen (S7) der zweiten Opferschicht (3b) und der dritten Opferschicht (3c) in einem Innenbereich (IB) unterhalb der ersten und der zweiten Spiegeleinrichtung (SP1; SP2) mittels eines Ätzverfahrens, wobei sich der Innenbereich (IB) zumindest über einem Teil des ersten Teilbereichs (E1) erstreckt, und wobei ein in der Interferometereinrichtung (1) verbleibender Bereich der ersten Opferschicht (3a), der zweiten Opferschicht (3b) und der dritten Opferschicht (3c) einen Zwischenschichtbereich (3) bilden, so dass die erste Spiegeleinrichtung (SP1) und die zweite Spiegeleinrichtung (SP2) in einem Außenbereich (AB) des Zwischenschichtbereichs (3) eingefasst oder darauf angeordnet sind, und sich der erste Teilbereich (E1) ganz oder zum Teil im Innenbereich (IB) erstreckt und auf dem Zwischenschichtbereich (3) angeordnet ist und sich der zweite Teilbereich (E2) im Außenbereich (AB) des Zwischenschichtbereichs (3) erstreckt.

12. Verfahren nach Anspruch 11, bei welchem eine Ausnehmung im ersten Teilbereich (E1) und in einem optischen Bereich (OB) der Interferometereinrichtung (1) ausgeformt wird und die erste Opferschicht (3a) in dieser Ausnehmung entfernt wird.

## Claims

1. Interferometer device (1), comprising
- a substrate (2);
- an intermediate layer region (3), which is applied on the substrate (2);
- a first mirror device (SP1) and a second mirror device (SP2), which are aligned plane-parallel with one another and are separated from one another by a first distance (d12) and are framed in the intermediate layer region (3) or are arranged thereon, the intermediate layer region (3) being removed in an inner region (IB) below the first mirror device (SP1) and/or below the second mirror device (SP2); and
- a laterally structured electrode (E), which comprises a first subregion (E1) and at least one second subregion (E2) laterally separated therefrom and electrically insulated, which subregions can be connected to different electrical potentials, the electrode (E) being arranged at a second distance (d2) from the first or the second mirror device (SP1; SP2), the first subregion (E1) extending in the inner region (IB) and being arranged on the intermediate layer region (3a) and the second subregion (E2) extending in an outer region (AB) of the intermediate layer region (3), so that the first mirror device (SP1) and/or the second mirror device (SP2) is movable electrostatically and parallel to the substrate (2) through the first subregion (E1) in the inner region (IB) and the first distance (d12) can be varied, the electrode (E) being located between or under the mirror devices (SP1; SP2) and the second subregion (E2) being framed in the outer region (AB) in the intermediate layer region (3) and anchored there.

2. Interferometer device (1) according to Claim 1, wherein the electrode (E) comprises in the inner region (IB) a recess in an optical region (OB) of the interferometer device (1), and the first subregion (E1) and the second subregion (E2) laterally extend around the recess at least partially.

3. Interferometer device (1) according to Claim 1 or 2, wherein the electrode (E) comprises a ring electrode.

4. Interferometer device (1) according to one of Claims 1 to 3, wherein the subregions (E1; E2; ...; En) of the electrode are fully separated laterally from one another and electrically insulated from one another by separating trenches (TG).

5. Interferometer device (1) according to one of Claims 1 to 4, wherein the first and/or the second mirror device (SP1; SP2) comprises a Bragg mirror or a metal mirror.

6. Interferometer device (1) according to one of Claims 1 to 5, wherein the first distance (d12) is less than the second distance (d2).

7. Interferometer device (1) according to one of Claims 1 to 6, wherein the first subregion (E1) comprises a bearing region (E1a), which is laterally electrically insulated, and wherein the first or the second mirror device (SP1; SP2) faces directly toward the electrode (E) and comprises abutment studs (AN) in the inner region (IB), which extend away from a mirror surface of the electrode (E) and can be placed on the bearing region (E1a) in the event of actuation.

8. Interferometer device (1) according to one of Claims 1 to 7, wherein the first and/or the second mirror device (SP1; SP2) comprise an undoped material in the inner region (IB).

9. Interferometer device (1) according to one of Claims 1 to 8, which comprises an etch stop (4), which forms a side wall at the intermediate layer region (3) laterally between the inner region (IB) and the outer region (AB).

10. Interferometer device (1) according to one of Claims 1 to 9, wherein the first and/or the second mirror device (SP1; SP2) are connected to an electrical potential.

11. Method for producing an interferometer device (1), comprising
- provision (S1) of a substrate (2) and of a first sacrificial layer (3a) on the substrate (2);
- application (S2) of an electrode (E) onto the first sacrificial layer (3a) and structuring (S2a) of the electrode into a first subregion (E1) and at least one second subregion (E2) separated laterally and electrically therefrom;
- application (S3) of a second sacrificial layer (3b) onto the electrode (E) and onto the first sacrificial layer (3a);
- arrangement (S4) of a first mirror device (SP1) on the second sacrificial layer (3b);
- application (S5) of a third sacrificial layer (3c) on the first mirror device (SP1);
- arrangement (S6) of a second mirror device (SP2) on the third sacrificial layer (3c) in a plane-parallel fashion over the first mirror device (SP1) at a first distance (d12); and
- removal (S7) of the second sacrificial layer (3b) and of the third sacrificial layer (3c) in an inner region (IB) below the first and the second mirror device (SP1; SP2) by means of an etching method, the inner region (IB) extending at least over a part of the first subregion (E1), and a region, remaining in the interferometer device (1), of the first sacrificial layer (3a), of the second sacrificial layer (3b) and of the third sacrificial layer (3c) forming an intermediate layer region (3) so that the first mirror device (SP1) and the second mirror device (SP2) are framed in an outer region (AB) of the intermediate layer region (3) or are arranged thereon, and the first subregion (E1) extends fully or partly in the inner region (IB) and is arranged on the intermediate layer region (3), and the second subregion (E2) extends in the outer region (AB) of the intermediate layer region (3).

12. Method according to Claim 11, wherein a recess is formed in the first subregion (E1) and in an optical region (OB) of the interferometer device (1), and the first sacrificial layer (3a) is removed in this recess.

## Revendications

1. Dispositif d'interférométrie (1), comprenant
- un substrat (2) ;
- une zone de couche intermédiaire (3) qui est appliquée sur le substrat (2) ;
- un premier dispositif miroir (SP1) et un deuxième dispositif miroir (SP2) qui sont orientés de manière plane et parallèle l'un par rapport à l'autre et sont espacés l'un de l'autre d'une première distance (d12) et sont intégrés dans la zone de couche intermédiaire (3) ou disposés sur celle-ci, la zone de couche intermédiaire (3) étant éloignée dans une zone intérieure (IB) en dessous du premier dispositif miroir (SP1) et/ou en dessous du deuxième dispositif miroir (SP2) ; et
- une électrode (E) structurée latéralement qui comprend une première zone partielle (E1) et au moins une deuxième zone partielle (E2), isolée électriquement et séparée latéralement de celle-ci, qui peut être connectée à différents potentiels électriques, dans lequel l'électrode (E) est disposée de manière éloignée du premier ou du deuxième dispositif miroir (SP1 ; SP2) d'une deuxième distance (d2), dans lequel la première zone partielle (E1) s'étend dans la zone intérieure (IB) et est disposée sur la zone de couche intermédiaire (3a), et la deuxième zone partielle (E2) s'étend dans une zone extérieure (AB) de la zone de couche intermédiaire (3) de sorte que le premier dispositif miroir (SP1) et/ou le deuxième dispositif miroir (SP2) peuvent être déplacés de manière électrostatique et en parallèle au substrat (2) à travers la première zone partielle (E1) dans la zone intérieure (IB), et la première distance (d12) est variable, dans lequel l'électrode (E) se trouve entre ou sous les dispositifs miroirs (SP1 ; SP2), et la deuxième zone partielle (E2) dans la zone extérieure (AB) est intégrée dans la zone de couche intermédiaire (3) et est ancrée à cet endroit.

2. Dispositif d'interférométrie (1) selon la revendication 1, dans lequel l'électrode (E) comprend dans la zone intérieure (IB) un évidement dans une zone optique (OB) du dispositif d'interférométrie (1), et la première zone partielle (E1) et la deuxième zone partielle (E2) contournent l'évidement latéralement au moins en partie.

3. Dispositif d'interférométrie (1) selon la revendication 1 ou 2, dans lequel l'électrode (E) comprend une électrode annulaire.

4. Dispositif d'interférométrie (1) selon l'une quelconque des revendications 1 à 3, dans lequel les zones partielles (E1 ; E2 ; ... ; En) de l'électrode sont entièrement séparées latéralement les unes des autres et isolées électriquement les unes des autres par le biais de tranchées de séparation (TG).

5. Dispositif d'interférométrie (1) selon l'une quelconque des revendications 1 à 4, dans lequel le premier et/ou le deuxième dispositif miroir (SP1 ; SP2) comprennent un miroir de Bragg ou un miroir métallique.

6. Dispositif d'interférométrie (1) selon l'une quelconque des revendications 1 à 5, dans lequel la première distance (d12) est inférieure à la deuxième distance (d2).

7. Dispositif d'interférométrie (1) selon l'une quelconque des revendications 1 à 6, dans lequel la première zone partielle (E1) comprend une zone de pose (E1a) qui est latéralement isolée électriquement, et dans lequel le premier ou le deuxième dispositif miroir (SP1 ; SP2) est tourné directement vers l'électrode (E) et comprend des picots de butée (AN) dans la zone intérieure (IB) qui s'écartent à partir d'une surface de miroir vers l'électrode (E) et peuvent être posés sur la zone de pose (E1a) en cas d'activation.

8. Dispositif d'interférométrie (1) selon l'une quelconque des revendications 1 à 7, dans lequel le premier et/ou le deuxième dispositif miroir (SP1 ; SP2) comprennent un matériau non dopé dans la zone intérieure (IB) .

9. Dispositif d'interférométrie (1) selon l'une quelconque des revendications 1 à 8, qui comprend un dispositif d'arrêt de gravure (4) qui façonne une paroi latérale contre la zone de couche intermédiaire (3) latéralement entre la zone intérieure (IB) et la zone extérieure (AB).

10. Dispositif d'interférométrie (1) selon l'une quelconque des revendications 1 à 9, dans lequel le premier et/ou le deuxième dispositif miroir (SP1 ; SP2) sont connectés à un potentiel électrique.

11. Procédé de fabrication d'un dispositif d'interférométrie (1), comprenant les étapes consistant à
- fournir (S1) un substrat (2) et une première couche sacrificielle (3a) sur le substrat (2) ;
- appliquer (S2) une électrode (E) sur la première couche sacrificielle (3a) et structurer (S2a) l'électrode en une première zone partielle (E1) et au moins une deuxième zone partielle (E2) latérale par rapport à celle-ci et isolée électriquement,
- appliquer (S3) une deuxième couche sacrificielle (3b) sur l'électrode (E) et la première couche sacrificielle (3a) ;
- disposer (S4) un premier dispositif miroir (SP1) sur la deuxième couche sacrificielle (3b) ;
- appliquer (S5) une troisième couche sacrificielle (3c) sur le premier dispositif miroir (SP1) ;
- disposer (S6) un deuxième dispositif miroir (SP2) sur la troisième couche sacrificielle (3c) de manière plane et parallèle au-dessus du premier dispositif miroir (SP1) à une première distance (d12) ; et
- retirer (S7) la deuxième couche sacrificielle (3b) et la troisième couche sacrificielle (3c) dans une zone intérieure (IB) en dessous du premier et du deuxième dispositif miroir (SP1 ; SP2) au moyen d'un procédé de gravure, dans lequel la zone intérieure (IB) s'étend au moins sur une partie de la première zone partielle (E1), et dans lequel une zone restant dans le dispositif d'interférométrie (1) de la première couche sacrificielle (3a), de la deuxième couche sacrificielle (3b) et de la troisième couche sacrificielle (3c) constitue une zone de couche intermédiaire (3), de sorte que le premier dispositif miroir (SP1) et le deuxième dispositif miroir (SP2) sont intégrés dans une zone extérieure (AB) de la zone de couche intermédiaire (3) ou sont disposés sur celle-ci, et la première zone partielle (E1) s'étend entièrement ou partiellement dans la zone intérieure (IB) et est disposée sur la zone de couche intermédiaire (3), et la deuxième zone partielle (E2) s'étend dans la zone extérieure (AB) de la zone de couche intermédiaire (3).

12. Procédé selon la revendication 11, dans lequel un évidement est façonné dans la première zone partielle (E1) et dans une zone optique (OB) du dispositif d'interférométrie (1), et la première couche sacrificielle (3a) est retirée dans cet évidement.
